(19) Europäisches Patentamt / European Patent Office / Office européen des brevets

(11) **EP 4 253 096 B1**

(12) **EUROPEAN PATENT SPECIFICATION**

(45) Date of publication and mention of the grant of the patent:
**09.07.2025 Bulletin 2025/28**

(21) Application number: **23162031.1**

(22) Date of filing: **15.03.2023**

(51) International Patent Classification (IPC):
*B60C 15/02* (2006.01)    *B60C 15/06* (2006.01)
*B60C 15/024* (2006.01)

(52) Cooperative Patent Classification (CPC):
**B60C 15/02; B60C 15/024;** B60C 2015/0614;
B60C 2200/10

(54) **MOTORCYCLE TIRE**

MOTORRADREIFEN

PNEU DE MOTOCYCLETTE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:  **28.03.2022   JP 2022052296**

(43) Date of publication of application:
**04.10.2023   Bulletin 2023/40**

(73) Proprietor: **Sumitomo Rubber Industries, Ltd.
Kobe-shi, Hyogo 651-0072 (JP)**

(72) Inventor: **FUKUSHIMA, Kazuki
Kobe-shi, 651-0072 (JP)**

(74) Representative: **Manitz Finsterwald
Patent- und Rechtsanwaltspartnerschaft mbB
Martin-Greif-Strasse 1
80336 München (DE)**

(56) References cited:
WO-A1-2019/107253    WO-A1-2019/107254
CN-A- 111 699 097    JP-A- 2000 198 327
US-A1- 2021 155 058

**Description**

**BACKGROUND** OF THE INVENTION

FIELD OF THE INVENTION

The present invention relates to a tire for motorcycles.

BACKGROUND ART

Patent document 1 below discloses a motorcycle tire in which the angle of the bottom surface of the bead portion with respect to the tire axial direction is specially defined, and fitability with a wheel rim and maneuvering stability are improved in a well-balanced manner. Related technologies are known from US 2021/155058 A1, JP 2000 198327 A, CN 111 699 097 A, and WO 2019/107254 A1.

Patent Document 1: Japanese Patent Application Publication No. 2018-79802

SUMMARY OF THE INVENTION

PROBLEMS TO BE SOLVED BY THE INVENTION

In order to use a motorcycle tire, the tire is mounted on a standardized wheel rim whose diameter may vary within inevitable tolerances. Such variation in the rim diameter may affect the fitability of the tire with the rim, and the maneuvering stability of the tire, therefore, it is desirable to minimize such influence. Thus, there is a demand for a motorcycle tire which has excellent robustness, that is, a motorcycle tire which is less susceptible to external factors such as rim diameter tolerances.

The present invention was made in view of the situation as described above, and a primary objective of the present invention is to provide a motorcycle tire improved in robustness in terms of fitability with a wheel rim and maneuvering stability.

MEANS FOR SOLVING THE PROBLEMS

The present invention is set out in the appended claims. According to the present invention, a motorcycle tire comprises a pair of bead portions each with an annular bead core embedded therein and each having a bead bottom surface located radially inside the bead core,

wherein, in a non-rim assembled state of the tire in which the bead portions are held such that the axial distance between the axially outer surfaces of the bead portions matches a rim width of a regular rim for the tire, the following conditional expression (1):

$$0.99 =< Dc/(Dr+2T) =< 1.00$$

is satisfied, wherein

"Dc" is the inner diameter of the annular bead core measured at an axial position corresponding to the center in the tire axial direction of the bead core,
"Dr" is the diameter of the regular rim, and
"T" is the radial distance from the radially inner surface of the bead core to the bead bottom surface measured at the axial position corresponding to the center in the tire axial direction of the bead core.

EFFECTS OF THE INVENTION

In the motorcycle tire according to the present invention, therefore, robustness of the tire in terms of fitability with a wheel rim and maneuvering stability can be improved by the above configuration.

BRIEF DESCRIPTION OF THE DRAWINGS

FIG 1 is a cross-sectional view of a motorcycle tire as an embodiment of the present invention.

FIG 2 is an enlarged cross-sectional view of the bead portion of FIG 1.

FIG 3 is an enlarged view showing the outline of the bead portion of FIG 2.

## DETAILED DESCRIPTION OF THE INVENTION

An embodiment of the present invention will now be described in detail in conjunction with accompanying drawings.

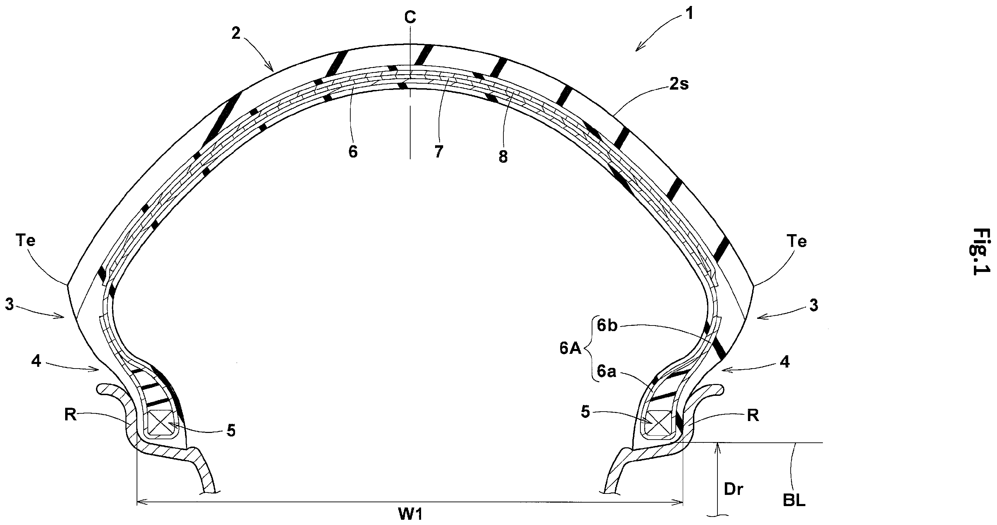

FIG 1 is a tire meridian cross-sectional view including the tire rotation axis of a motorcycle tire 1 according to the present embodiment under a regular rim assembled state. The motorcycle tire 1 in the present embodiment is for a rear wheel of a motorcycle suitable for on-road sports running. However, the present invention is not limited to such application.

The regular rim assembled state is such that the tire is mounted on a regular rim R and inflated to a normal pressure.

The regular rim is a wheel rim specified for the tire by a standard included in a standardization system on which the tire is based, for example, the "normal wheel rim" in JATMA, "Design Rim" in TRA, and "Measuring Rim" in ETRTO.

The normal pressure is air pressure specified for the tire by a standard included in a standardization system on which the tire is based, for example, the "maximum air pressure" in JATMA, maximum value listed in the "TIRE LOAD LIMITS AT VARIOUS COLD INFLATION PRESSURES" table in TRA, and "INFLATION PRESSURE" in ETRTO.

As shown in FIG 1, the tire 1 of the present embodiment comprises a tread portion 2 having tread edge Te, a pair of axially spaced bead portions 4 each with an annular bead core 5 embedded therein, a pair of sidewall portions 3 extending between the tread edge Te and bead portions 4, and a carcass 6 extending between the bead portions 4 through the tread portion 2 and the sidewall portions 3.

As a characteristic of a motorcycle tire, the tread portion 2 is curved in an arc-shape convex toward the radially outside so that the tread surface 2s can secure a sufficient contact area during turning or cornering with a large camber angle.

As the tread portion 2 is curved, the tread 2s thereof is also curved, and the tread edges Te thereof contact with the road surface when turning at the maximum camber angle.

The carcass 6 is composed of at least one carcass ply 6A of rubberized carcass cords. In the present embodiment, the carcass 6 is composed of a single carcass ply 6A, but may be composed of a plurality of carcass plies 6A.

The carcass ply 6A extends between the bead portions 4 through the tread portion 2 and the sidewall portions 3, and is turned up around the bead core 5 in each of the bead portions 4 from the axially inside to the axially outside so as to form a pair of turned-up portions 6b and a main portion 6a therebetween.

In order to reinforce the tread portion 2, the tread portion 2 is provided with a belt 7 and a band 8, for example.

The belt 7 is composed of at least one belt ply of parallel belt cords inclined at 10 to 45 degrees with respect to the tire circumferential direction, for example.

In the present embodiment, the belt 7 is composed of only one belt ply, but may be composed of a plurality of belt plies.

The band 8 comprises a jointless band ply made of at least one band cord spirally wound at an angle of not more than 5 degrees with respect to the tire circumferential direction, for example.

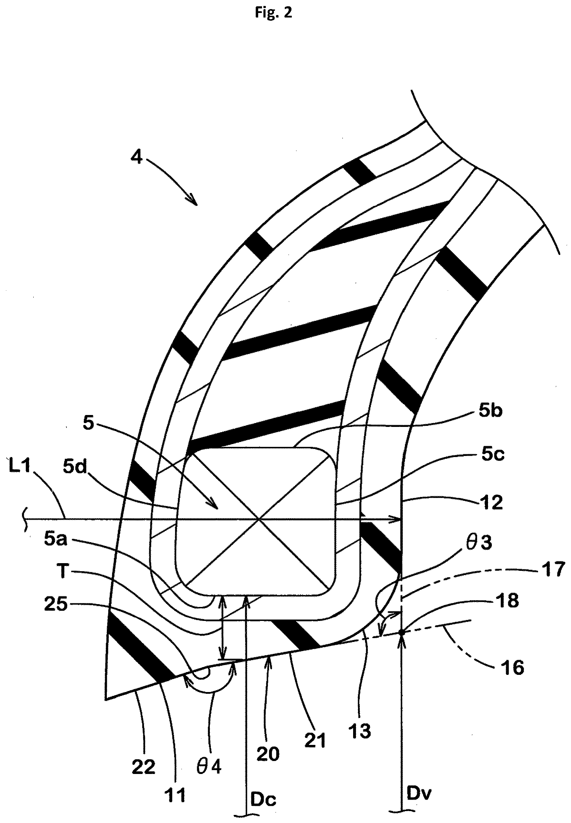

FIG 2 shows one of the bead portions 4. As shown, each of the bead portions 4 has an axially outer surface 12 on the axially outer side of the bead core 5, a bead bottom surface 11 on the radially inner side of the bead core 5, and a bead heel surface 13 extending in an arc shape and connecting between the axially outer surface 12 and the bead bottom surface 11.

When the tire 1 is mounted on the regular rim R, the axially outer surface 12, the bead heel surface 13 and the bead bottom surface 11 contact with the inner surface of the regular rim R from the rim flange inner surface to the bead seat of the rim.

According to the present invention, when the bead portions 4 are held so that the axial distance L1 between the axially outer surfaces 12 of the bead portions 4 becomes equal to the rim width W1 (shown in FIG 1) of the regular rim, without the tire being mounted thereon, the following conditional expression (1):

$$0.99 =< Dc/(Dr+2T) =< 1.00$$

is satisfied, wherein

"Dc" is the inner diameter of the annular bead core 5 measured at an axial position corresponding to the center in the tire axial direction of the bead core 5,

"T" is the distance in the tire radial direction between the radially inner surface 5a of the bead core 5 and the bead bottom surface 11 measured at the above-mentioned axial position corresponding to the center in the tire axial direction of the bead core 5,

"Dr" is the rim diameter of the regular rim R.

The rim diameter corresponds to the diameter measured at the bead baseline BL which is the rim diameter position defined by the standard.

The rim width W1 of the regular rim is also defined by the standard.

The axial distance L1 is measured at a radial position corresponding to the centers in the tire radial direction of the bead cores 5.

In this specification, unless otherwise noted, dimensions and the like of various tire portions refer to values measured under the non-rim assembled state.

If the inner diameter Dc of the bead core 5 slightly varies depending on the measurement position in the tire circumferential direction, it is desirable to use the average value of the values measured at a plurality of different positions in the tire circumferential direction, as the inner diameter Dc. The average value is obtained from at least two inner diameter values measured at positions, for example, shifted by 90 degrees in the tire circumferential direction. It is desirable that the average value is determined based on inner diameters measured at as many positions as possible.

As for the distance T, as well, it is desirable to adopt the average value obtained in the same manner as in the inner diameter Dc.

By adopting the configuration as described above, the tire 1 according to the present invention can be improved in robustness in terms of fitability with a wheel rim and maneuvering stability as follows.

The "Dr+2T" in the above conditional expression (1) corresponds to the outer diameter of the substantial part that the bead core tightens. That is, in the present invention, the inner diameter Dc of the bead core 5, and the outer diameter of the substantial part that the bead core tightens are defined with high accuracy by the conditional expression (1). As a result, even if the rim diameter of the rim on which the tire 1 is mounted is smaller or larger than the design value, or even if the rim diameter varies greatly depending on the measurement position, the fitability with the wheel rim and the maneuvering stability are less likely to be excessively lowered. Therefore, the tire 1 according to the present invention can improve robustness in terms of fitability with the wheel rim and maneuvering stability.

In this specification, fitability with a wheel rim means workability when mounting a tire on a wheel rim. When mounting a tire on a rim, the bead portion needs to climb over the hump of the bead seat of the rim, by injecting a high-pressure air in the tire. Thus, the lower the injected air pressure, the better the fitability with the wheel rim. On the other hand, maneuvering stability means stability when a two-wheeled vehicle equipped with a tire is run, and there is a tendency that the greater the fitting force of the tire acting on the rim, the higher the maneuvering stability.

Thus, the fitability with the wheel rim and the maneuvering stability tend to contradict each other.

In the tire 1 according to the present invention, due to the configuration described above, it can be expected to improve both the fitability with the wheel rim and the maneuvering stability which tend to conflict.

In the present embodiment, the bead core 5 has a rectangular cross-sectional shape and is surrounded by its outer surface including the radially inner surface 5a, a radially outer surface 5b, an axially outer first side surface 5c and an axially inner second side surface 5d.

The corner portions where these surfaces are connected are curved in an arc shape.

The radially inner surface 5a and outer surface 5b each extend along the tire axial direction. The first side surface 5c and second side surface 5d each extend along the tire radial direction, and the angle difference between the first side surface 5c and second side surface 5d is, for example, not more than 10 degrees, preferably not more than 5 degrees.

In the present embodiment, the first side surface 5c and second side surface 5d are substantially parallel with each other.

Such bead core 5 reliably prevents the bead portion 4 from collapsing, and serves to enhance maneuvering stability.

In the above-described non-rim assembled state, the diameter Dv of the intersection of a virtual first straight line 16 extending axially outwardly from the bead bottom surface 11 and a virtual second straight line 17 extending radially inwardly from the axially outer surface 12 is preferably 99.2% to 99.6%, more preferably 99.3% to 99.5% of the rim diameter Dr of the regular rim. Thereby, the inner diameter of the bead portion 4 is optimized, and it is possible to improve the resistance to bead unseating and the maneuvering stability while maintaining the fitability with the wheel rim.

The first straight line 16 corresponds to a tangent line passing through the end of the bead bottom surface 11 on the bead heel surface 13 side.

The second straight line 17 corresponds to a tangent line passing through the end of the axially outer surface 12 on the bead heel surface 13 side.

The bead heel surface 13 is curved convexly toward an oblique direction (which is toward both the axially outside and the radially inside). In the present embodiment, the bead heel surface 13 is a circular arc having a single radius of curvature. The diameter Dv corresponds to the diameter of an imaginary circle formed by connecting the points of intersection 18 of the first straight lines 16 and the second straight lines 17 over the entire circumference of the tire.

The angle θ3 between the first straight line 16 and the second straight line 17 is preferably 90 to 110 degrees, more preferably 95 to 105 degrees.

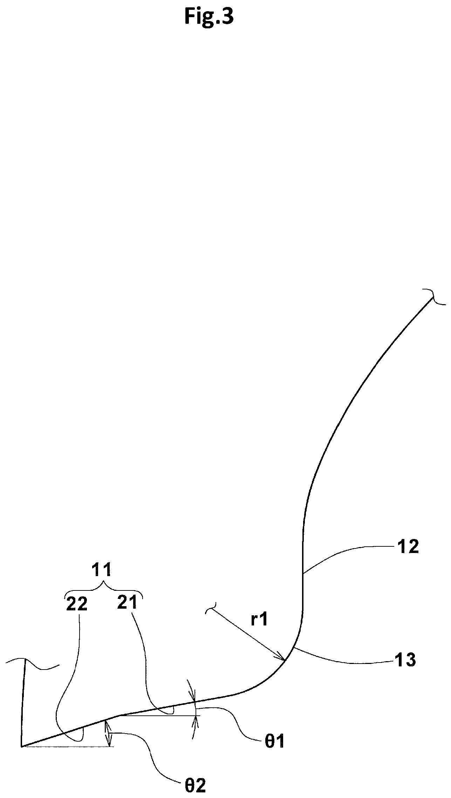

FIG 3 shows the outline of the bead portion 4. As shown, the bead bottom surface 11 is made up of a first bottom surface 21 inclined with respect to the tire axial direction, and a second bottom surface 22 extending from the axially inner end of the first bottom surface 21 at an angle with respect to the tire axial direction which is greater than the first bottom surface 21. The bead bottom surface 11 including the first bottom surface 21 and the second bottom surface 22 improves the fitability with the heel rim and the resistance to bead unseating in a well-balanced manner.

In the cross section of the tire in the non-rim assembled state, the first bottom surface 21 extends linearly, and the angle θ1 of the first bottom surface 21 with respect to the tire axial direction is not more than 15 degrees, preferably not more than 10 degrees, more preferably not more than 7 degrees. For example, the angle θ1 is 3 to 7 degrees. The angle between the first bottom surface 21 and the radially inner surface 5a of the bead core 5 is preferably in a range from 0 to 10 degrees.

In the present embodiment, the angle of the first bottom surface 21 is the same as the angle of the first straight line 16 with respect to the tire axial direction.

In the cross section of the tire in the non-rim assembled state, the second bottom surface 22 extends linearly, and the angle θ2 of the second bottom surface 22 with respect to the tire axial direction is not more than 30 degrees, preferably not more than 24 degrees. For example, the angle θ2 is 18 to 24 degrees. Such second bottom surface 22 can improve the resistance to bead unseating while maintaining the fitability with the wheel rim.

In order to improve the fitability with the wheel rim and the resistance to bead unseating in a well-balanced manner, as shown in FIG 2, the angle θ4 between the first bottom surface 21 and the second bottom surface 22 is preferably 150 degrees or more, more preferably 160 degrees or less, but preferably 175 degrees or less, more preferably 170 degrees or less.

The angle θ4 between the first bottom surface 21 and the second bottom surface 22 is larger than the angle θ3 between the first straight line 16 and the second straight line 17. The difference between the angle θ3 and the angle θ4 is, for example, 60 to 80 degrees, preferably 65 to 75 degrees. Thereby, the pressure of the axially outer surface 12 acting on the wheel rim, and the pressure of the second bottom surface 22 acting on the wheel rim are improved in a well-balanced manner, and excellent maneuvering stability is exhibited.

The boundary 25 between the first bottom surface 21 and the second bottom surface 22 is positioned in a region obtained by virtually radially inwardly extending the axially extending range of the bead core 5 in the cross section of the tire.

Preferably, the boundary 25 is positioned axially inward of the center in the tire axial direction of the bead core 5.

The axial distance between the boundary 25 and the center of the bead core 5 is, for example, 25% to 35% of the axial width of the bead core 5.

Thereby, the second bottom surface 22 can be in close contact with the wheel rim, and the durability of the bead portion 4 is improved.

The distance T is set in a range from 20% to 40%, preferably 25% to 35% of the width in the tire radial direction of the bead core 5. Thereby, the fitability with the wheel rim and the maneuvering stability are improved in a well-balanced manner.

The axially outer surface 12 comprises a portion extending linearly from the end on the bead heel side of the axially outer surface 12 in the cross section of the tire.

This portion has an angular difference of not more than 5 degrees from the first side surface 5c of the bead core 5.

At the position in the tire radial direction of the center in the tire radial direction of the bead core 5, the thickness of the rubber on the axially outer side of the bead core 5 is preferably not more than 3.0 mm. This makes it easier for the bead portion 4 to climb over the hump when mounting the tire on the wheel rim, and the fitability with the wheel rim is improved.

As shown in FIG 3, in the cross section of the bead portion 4, the radius r1 of curvature of the bead heel surface 13 is preferably set in a range from 2.5 to 4.0 mm. Thereby, the fitability with the heel rim and the resistance to bead unseating can be enhanced in a well-balanced manner.

While detailed description has been made of the motorcycle tire as an embodiment of the present invention, the present invention can be embodied in various forms as claimed.

**Comparison tests**

Based on the structure shown in FIG 1, motorcycle tires (for rear wheel) of size 190/55ZR17 were experimentally manufactured as test tires (comparative examples Ref.1-Ref.2 and working examples EC.1-EX.10), changing the value of Dc/(Dr+2T). Specifications of the test tires are shown in Table 1.

The test tires were tested for fitability with the wheel rim, maneuvering stability, resistance to bead unseating, and robustness in terms of the fitability with the wheel rim and the maneuvering stability.

Common specifications and test methods for the test tires are as follows.

Rim size: MT6.00
Tire inflation pressure: 250 kPa
Test vehicle: 1000cc motorcycle

< Fitability with Wheel Rim >

When mounting the test tire on the wheel rim by injecting high-pressure air into the inside of the tire, the air pressure required for the bead portion to climb over the hump of the heel rim was measured.

As the test results, reciprocals of the measured pressure values are indicated in Table 1 by an index based on Comparative example Ref. 1 being 100, wherein the larger the value, the better the fitability with the wheel rim.

< Resistance to Bead unseating >

According to Japanese Industrial Standard (JIS) D4230, a bead unseating test was conducted. In the test, a lateral force was applied to the bead portion of the test tire mounted on the wheel rim and substantially un-inflated, and the resistance force was measured when the bead portion came off the rim.

The results are indicated in Table 1 by an index based on Comparative Example Ref. 1 being 100, wherein the larger the value, the better the resistance to bead unseating.

< Maneuvering stability >

When the test vehicle with the test tire was run on a circuit, the test rider evaluated the maneuvering stability.

The results are indicated in Table 1 by an index based on Comparative example Ref. 1 being 100, wherein the larger the number, the better the maneuvering stability.

< Robustness of Fitability with rim and Maneuvering stability >

Using a tire bead compression machine manufactured by Hoffmann, the fitting force of the bead portion to the wheel rim (so called "Hoffman fitting force" in kN) was measured. Based on the measured values, the robustness in terms of the fitability with the wheel rim and maneuvering stability, were evaluated.

A specific evaluation method is as follows.

(1) The test tire was mounted on a test jig capable of adjusting to an arbitrary rim diameter. Then, there were measured the fitting force when the rim diameter of the jig is 0.3 mm larger than the rim diameter of the regular rim (this measured value is hereinafter referred to as the first measured value), and the fitting force when the rim diameter of the jig is 0.3 mm smaller than the rim diameter of the regular rim was measured (this measured value is hereinafter referred to as the second measured value).

(2) The first measured value and the second measured value were plotted on a graph where the horizontal axis is the rim diameter, and the vertical axis is the fitting force. Then, a straight line was drawn between the two plotted points, and the gradient of the straight line was measured.

(3) The robustness was evaluated by the gradient of the straight line measured in (2) above. As the test results, reciprocals of the measured gradient of the straight lines are indicated in Table 1 by an index based on Comparative example Ref.1 being 100, wherein the larger the value, the smaller the change in the fitting force due to the difference in rim diameter, which indicates that the robustness is excellent.

Table 1

| Tire | Ref.1 | Ref.2 | Ex.1 | Ex.2 | Ex.3 | Ex.4 | Ex.5 | Ex.6 | Ex.7 | Ex.8 | Ex.9 | Ex.10 |
|---|---|---|---|---|---|---|---|---|---|---|---|---|
| Dc/(Dr+2T) | 0.98 | 1.1 | 0.99 | 1 | 0.99 | 0.99 | 0.99 | 0.99 | 0.99 | 0.99 | 0.99 | 0.99 |
| Dv/Dr(%) | 99.3 | 99.3 | 99.3 | 99.3 | 99.5 | 99.3 | 99.3 | 99.3 | 99.3 | 99.3 | 99.3 | 99.3 |
| bead heel surface curvature radius r1 (mm) | 2.5 | 2.5 | 2.5 | 2.5 | 2.5 | 1.5 | 3.5 | 4.5 | 2.5 | 2.5 | 2.5 | 2.5 |

(continued)

| Tire | Ref.1 | Ref.2 | Ex.1 | Ex.2 | Ex.3 | Ex.4 | Ex.5 | Ex.6 | Ex.7 | Ex.8 | Ex.9 | Ex.10 |
|---|---|---|---|---|---|---|---|---|---|---|---|---|
| first bottom surface angle θ1 (deg.) | 5 | 5 | 5 | 5 | 5 | 5 | 5 | 5 | 7 | 9 | 5 | 5 |
| second bottom surface angle θ2 (deg.) | 21 | 21 | 21 | 21 | 21 | 21 | 21 | 21 | 21 | 21 | 23 | 25 |
| fitability with rim | 100 | 120 | 110 | 110 | 115 | 100 | 115 | 120 | 110 | 95 | 110 | 100 |
| bead unseating | 100 | 85 | 95 | 95 | 95 | 95 | 95 | 90 | 110 | 110 | 100 | 100 |
| maneuvering stability | 100 | 90 | 110 | 100 | 90 | 95 | 105 | 105 | 110 | 105 | 105 | 105 |
| robustness | 100 | 100 | 115 | 120 | 105 | 115 | 115 | 105 | 115 | 115 | 120 | 120 |

From the test results, it was confirmed that the example tires according to the present invention had improved robustness in terms of fitting to the rim and maneuvering stability. In addition, it was confirmed that the example tires had well-balanced improvement in fitability with the wheel rim, resistance to bead unseating, and maneuvering stability.

**DESCRIPTION OF THE REFERENCE SIGNS**

4       bead portion
5       bead core
11      bead bottom surface
R       regular rim
Dc      inner diameter of bead core at axial center position of bead core
Dr      rim diameter of regular rim
T       radial distance from bead core inner surface to bead bottom surface at axial center position of bead core

**Claims**

1.  A motorcycle (1) tire comprising a pair of bead portions (4) each with an annular bead core (5) embedded therein and each having a bead bottom surface (11) located radially inside the bead core (5),
    **characterized in that**
    in a non-rim assembled state of the tire (1) in which the bead portions (4) are held such that the axial distance (L1) between the axially outer surfaces (12) of the bead portions (4) matches a rim width (W1) of a regular rim (R) for the tire (1), the following conditional expression (1):

$$0.99 =< Dc/(Dr+2T) =< 1.00$$

    is satisfied, wherein

        "Dc" is the inner diameter of the annular bead core (5) measured at an axial position corresponding to the center in the tire axial direction of the bead core (5),
        "Dr" is the diameter of the regular rim (R), and
        "T" is the radial distance from the radially inner surface (5a) of the bead core (5) to the bead bottom surface (11) measured at the axial position corresponding to the center in the tire axial direction of the bead core (5).

2.  The motorcycle tire according to claim 1, wherein
    in the non-rim assembled state, the diameter Dv of the intersection (18) of a virtual first straight line (16) extending axially outwardly from the bead bottom surface (11) and a virtual second straight line (17) extending radially inwardly from the axially outer surface (12) is 99.2% to 99.6% of the rim diameter Dr of the regular rim (R).

3. The motorcycle tire according to claim 1 or 2, wherein

each of the bead portions (4) has an axially outer surface (12) on the axially outer side of the bead core (5), and a bead heel surface (13) extending in an arc shape and connecting between the axially outer surface (12) and the bead bottom surface (11), and
in the cross section of the bead portion (4), the radius (r1) of curvature of the bead heel surface (13) is in a range from 2.5 to 4.0 mm.

4. The motorcycle tire according to any one of claims 1 to 3, wherein
the bead bottom surface (11) comprises a first bottom surface (21), and a second bottom surface (22) extending axially inwardly from the first bottom surface (21) at an angle greater than that of the first bottom surface (21) with respect to the tire axial direction.

5. The motorcycle tire according to claim 4, wherein
the first bottom surface (21) has an angle ($\theta1$) of not more than 7 degrees with respect to the tire axial direction.

6. The motorcycle tire according to claim 4 or 5, wherein
the second bottom surface (22) has an angle ($\theta2$) of not more than 24 degrees with respect to the tire axial direction.

**Patentansprüche**

1. Motorradreifen (1), umfassend ein Paar Wulstabschnitte (4), in denen jeweils ein ringförmiger Wulstkern (5) eingebettet ist und von denen jeder eine Wulstbodenfläche (11) aufweist, die sich radial innen von dem Wulstkern (5) befindet,
**dadurch gekennzeichnet, dass**
in einem nicht auf die Felge aufgezogenen Zustand des Reifens (1), in dem die Wulstabschnitte (4) derart gehalten sind, dass der axiale Abstand (L1) zwischen den axial äußeren Oberflächen (12) der Wulstabschnitte (4) mit einer Felgenbreite (W1) einer regulären Felge (R) für den Reifen (1) übereinstimmt, der folgende Bedingungsausdruck (1):

$$0,99 =< Dc/(Dr+2T) =< 1,00$$

erfüllt ist, wobei

"Dc" der Innendurchmesser des ringförmigen Wulstkerns (5) ist, gemessen an einer axialen Position, die der Mitte des Wulstkerns (5) in der axialen Richtung des Reifens entspricht,
"Dr" der Durchmesser der regulären Felge (R) ist, und
"T" der radiale Abstand von der radial inneren Oberfläche (5a) des Wulstkerns (5) zu der Wulstbodenfläche (11) ist, gemessen an der axialen Position, die der Mitte des Wulstkerns (5) in der axialen Richtung des Reifens entspricht.

2. Motorradreifen nach Anspruch 1, wobei in dem nicht auf die Felge aufgezogenen Zustand der Durchmesser Dv des Schnittpunkts (18) einer virtuellen ersten geraden Linie (16), die sich von der Wulstbodenfläche (11) axial nach außen erstreckt, und einer virtuellen zweiten geraden Linie (17), die sich von der axial äußeren Oberfläche (12) radial nach innen erstreckt, 99,2 % bis 99,6 % des Felgendurchmessers Dr der regulären Felge (R) beträgt.

3. Motorradreifen nach Anspruch 1 oder 2, wobei

jeder der Wulstabschnitte (4) eine axial äußere Oberfläche (12) auf der axial äußeren Seite des Wulstkerns (5) und eine Wulstfersenfläche (13) aufweist, die sich in einer Bogenform erstreckt und eine Verbindung zwischen der axial äußeren Oberfläche (12) und der Wulstbodenfläche (11) herstellt, und
in dem Querschnitt des Wulstabschnitts (4) der Krümmungsradius (r1) der Wulstfersenfläche (13) in einem Bereich von 2,5 bis 4,0 mm liegt.

**4.** Motorradreifen nach einem der Ansprüche 1 bis 3, wobei die Wulstbodenfläche (11) eine erste Bodenfläche (21) und eine zweite Bodenfläche (22) umfasst, die sich von der ersten Bodenfläche (21) in einem Winkel, der größer als der der ersten Bodenfläche (21) ist, in Bezug auf die axiale Richtung des Reifens axial nach innen erstreckt.

**5.** Motorradreifen nach Anspruch 4, wobei die erste Bodenfläche (21) einen Winkel ($\theta1$) von nicht mehr als 7 Grad in Bezug auf die axiale Richtung des Reifens aufweist.

**6.** Motorradreifen nach Anspruch 4 oder 5, wobei die zweite Bodenfläche (22) einen Winkel ($\theta2$) von nicht mehr als 24 Grad in Bezug auf die axiale Richtung des Reifens aufweist.

## Revendications

**1.** Pneumatique pour motocyclette (1) comprenant une paire de portions de talon (4) ayant chacune une âme de talon annulaire (5) enchâssée à l'intérieur et ayant chacune une surface de fond de talon (11) située radialement à l'intérieur de l'âme de talon (5),

**caractérisé en ce que**

dans un état non assemblé sur jante du pneumatique (1) dans lequel les portions de talon (4) sont maintenues de telle sorte que la distance axiale (L1) entre les surfaces axialement extérieures (12) des portions de talon (4) correspondant à une largeur de jante (W1) d'une jante ordinaire (R) pour le pneumatique (1), l'expression conditionnelle (1) suivante :

$$0,99 =< Dc/(Dr+2T) =< 1,00$$

est satisfaite,

« DC » étant le diamètre intérieur de l'âme de talon annulaire (5) mesuré à une position axiale correspondant au centre dans la direction axiale du pneumatique de l'âme de talon (5),

« Dr » est le diamètre de la jante ordinaire (R), et

« T » est la distance radiale depuis la surface radialement intérieure (5a) de l'âme de talon (5) jusqu'à la surface de fond de talon (11) mesurée à la position axiale correspondant au centre dans la direction axiale du pneumatique de l'âme de talon (5).

**2.** Pneumatique pour motocyclette selon la revendication 1, dans lequel dans l'état non assemblé sur jante, le diamètre Dv de l'intersection (18) d'une première ligne droite virtuelle (16) s'étendant axialement vers l'extérieur depuis la surface de fond de talon (11) et d'une seconde ligne droite virtuelle (17) s'étendant radialement vers l'intérieur depuis la surface axialement extérieure (12) est de 99,2 % à 99,6 % du diamètre de jante Dr de la jante ordinaire (R).

**3.** Pneumatique pour motocyclette selon la revendication 1 ou 2, dans lequel chacune des portions de talon (4) a une surface axialement extérieure (12) sur le côté axialement extérieur de l'âme de talon (5), et une surface arrière de talon (13) s'étendant dans une forme arquée et assurant une connexion entre la surface axialement extérieure (12) et la surface de fond de talon (11), et

dans la section transversale de la portion de talon (4), le rayon (r1) de courbure de la surface arrière de talon (13) est dans une plage allant de 2,5 à 4,0 mm.

**4.** Pneumatique pour motocyclette selon l'une quelconque des revendications 1 à 3, dans lequel

la surface de fond de talon (11) comprend une première surface de fond (21) et une seconde surface de fond (22) s'étendant axialement vers l'intérieur depuis la première surface de fond (21) sous un angle supérieur à celui de la première surface de fond (21) par rapport à la direction axiale du pneumatique.

**5.** Pneumatique pour motocyclette selon la revendication 4, dans lequel

la première surface de fond (21) a un angle ($\theta1$) qui n'est pas supérieur à 7 degrés par rapport à la direction axiale du pneumatique.

**6.** Pneumatique pour motocyclette selon la revendication 4 ou 5, dans lequel la seconde surface de fond (22) a un angle ($\theta2$) qui n'est pas supérieur à 24 degrés par rapport à la direction axiale du pneumatique.

## Fig.1

**Fig. 2**

# Fig.3

**REFERENCES CITED IN THE DESCRIPTION**

**Patent documents cited in the description**

- US 2021155058 A1
- JP 2000198327 A
- CN 111699097 A
- WO 2019107254 A1
- JP 2018079802 A